# EUROPEAN PATENT SPECIFICATION

(11) **EP 1 788 783 B1**
(45) Date of publication and mention of the grant of the patent: **17.06.2009**
(21) Application number: 05292448.7
(22) Date of filing: 18.11.2005
(51) Int. Cl.: H04L 29/08

(54) **Ubiquitous data backup**
Allgegenwärtiges Daten-Backup
Sauvegarde de données omniprésente

(43) Date of publication of application: 23.05.2007
(73) Proprietor: Hitachi, Ltd., Tokyo 100-8280 (JP)
(72) Inventor: Aoshima, Hirokazu, 06400 Cannes (FR)
(74) Representative: MERH-IP Matias Erny Reichl Hoffmann

(56) References cited:
- US-B1- 6 615 258
- POSTEL J ET AL: "File Transfer Protocol (FTP)" IETF STANDARD, INTERNET ENGINEERING TASK FORCE, IETF, CH, October 1985 (1985-10), XP015006955 ISSN: 0000-0003
- RUSSELL HOUSLEY (SPYRUS) WILLIAM A NACE (NSA) PETER YEE (SPYRUS): "FTP Authentication Using DSA" IETF STANDARD-WORKING-DRAFT, INTERNET ENGINEERING TASK FORCE, IETF, CH, vol. cat, no. 3, December 1999 (1999-12), XP015016325 ISSN: 0000-0004

## Description

The present invention relates to a method and a system for ubiquitous data back up. More particularly, the present invention relates to a method and system for backing up data from mobile terminals.

Mobile terminals/devices become more and more popular in business and private environments. As a result thereof, the data volume stored on these terminals increases steadily. With the increasing data volume, also the value of the data increases. However, as this data has been usually created by the user some time ago, after a loss it is very difficult to re-create all the data.

Further, as mobile terminals are small in size and fragile, the likelihood of damage or loss of the whole terminals together with the stored data may not be neglected.

Additionally, the mobile terminals have a limited memory. Accordingly, if the user wants temporarily free memory on the mobile terminals a back up routine is necessary.

Accordingly, there is a need for a backup solution suitable for mobile terminals within a mobile network which is easy to use and is secure for the user and the data.

It is therefore an object of the present invention to provide an efficient mechanism to back up and retrieve data from and to a mobile terminal.

It is a further on the object of the present invention to reward cooperative network partners.

These objects are achieved by a method and system for ubiquitous back up as defined in the independent claims. The dependent claims relate to preferred embodiments of the invention.

The used network can be GSM, UMTS, WDMA, CDMA, WLAN, Bluetooth, ZigBee or any other suitable network.

The mobile terminal can be at least one out of mobile telephone, PDA, smart phone, sensor, vehicle, notebook, audio player and video player.

When the mobile terminal wants to back up data, the terminal can request back up of the data.

In a method for backing up data between multiple mobile terminals at least one of the following steps is provided: launching a back up request by a sending terminal, sending a back up request message from the sending terminal to a receiving terminal, sending a back up request acknowledge message from the receiving terminal to the sending terminal, sending a back up data message from the sending terminal to the receiving terminal, storing the back up data message in the receiving terminal, and/or sending a back up acknowledge message from the receiving terminal to the sending terminal.

By this method the sending terminal receives a feedback from the receiving terminal if the data can be accepted. Further, the sending terminal receives feedback from the receiving terminal about the verification and storage of the sent data.

A method for retrieving data between multiple mobile terminals may comprise the steps of: launching a retrieval request by a receiving terminal, sending a retrieval request message from the receiving terminal to a sending terminal, sending a retrieval authentication request message from the sending terminal to the receiving terminal, sending a retrieval authentication message from the receiving terminal to the sending terminal, sending a retrieval data message from the sending terminal to the receiving terminal, storing the retrieval data message in the receiving terminal, and/or sending a retrieval acknowledge message from the receiving terminal to the sending terminal.

By this the receiving terminal ensures that only an authenticated terminal receives the requested data.

In the case of indirect retrieval, no direct communication between a mobile terminal and the terminal with the backed up data is needed. On the other hand, when no direct communication between the terminals is possible, the terminals should be able to communicate via the TTP infrastructure.

However, in the following it is assumed that a TTP infrastructure exists and that the mobile terminal and the terminal holding the backed up data can access the TTP infrastructure. The indirect retrieval is more or less a two-step process. In the first step, the terminal holding the backed up data forwards the data to the TTP infrastructure. In a second step, the mobile terminal requesting the backed up data can retrieve the data from the TTP infrastructure.

The TTP infrastructure is an entity which facilitates interactions between two parties who both trust the third party. The two parties, namely the sending terminal and the receiving terminal, use this trust to secure their own interactions. TTP infrastructures are common in cryptographic protocols. Anyone who accepts the TTP could be a participant of the back up/restore method.

A method for forwarding data between a terminal and a TTP infrastructure may comprise the steps of: launching a forward request by a sending terminal, sending a data forward message from the sending terminal to the trusted third party infrastructure, sending an acknowledge message from the trusted third party infrastructure to the sending terminal, and/ or sending a result of check message from the sending terminal to the trusted third party infrastructure.

This forwarding may be done whenever no direct communication between the terminals is any longer possible.

A method for retrieving data between a terminal and a trusted third party infrastructure may comprise the steps of: launching an indirect retrieval request by a receiving terminal, sending an indirect retrieval request message from the receiving terminal to a trusted third party infrastructure, sending an indirect retrieval authentication request message from the trusted third party infrastructure to the receiving terminal, sending a back up request message from the receiving terminal to the trusted third party infrastructure, sending a back up data message from the trusted third party infrastructure to the receiving terminal, storing the back up data message in the receiving terminal, and/or sending an indirect retrieval acknowledge message from the receiving terminal to the trusted third party infrastructure.

In the above-mentioned method, any of the messages can be generated by the sending terminal and/or the receiving terminal. Further, the sending terminal and/or the receiving terminal may verify and/or check the sent and received messages.

A system for back up and retrieval of data between multiple mobile terminals may comprise:
a sending terminal with data to be backed up, a back up request message generating means for generating a back up request message, a back up data message generating means for generating a back up data message, a receiving terminal for receiving data to be backed up, a back up request acknowledge message generating means for generating a back up request acknowledge message, a back up acknowledge message generating means for generating a back up acknowledge message, at least a secure element connected with the respective terminal during message generation, and/or a communication connection between the sending terminal and the receiving terminal for transmitting messages and data.

At least one of the steps can be executed by a secure element connected to the respective terminal. Such a secure element can be a smartcard comprising a cryptographic processor. The TTP infrastructure implements at least some functions on the secure element. The TTP infrastructure may also implements asymmetric key pair on the secure element or the key pair may be generated on the secure element. The private key of the asymmetric key pair may also be securely stored within the TTP infrastructure.

By defining a message format, which employs encryption/decryption using asymmetric keys, the mobile terminals are not able to use the above mentioned methods without the respective keys. Additionally, the secure elements are able to record every transaction made by the mobile terminal. The secure element can also evaluate the behavior of the mobile terminal. Accordingly, the secure element can halt a transaction if the transaction deviates from the evaluated usage pattern.

The messages used during back up and/or retrieval include at least one of MessageTypeID, transaction ID and Message Authentication Code (MAC) of the message. The transaction ID is a unique number. The MessageTypeID can be one out of B1-B5 (back up), DR1-DR6 (direct retrieval), F1-F3 (forward) or IR1-IR5 (indirect retrieval).

Additionally, the back up request messages comprises at least one of size of backed up data and hash value of backed up data. The hash value is calculated by algorithms well known in the art. The back up message may further comprise at least one of data and public key of the sending terminal. The public key is the corresponding key to a private key of the respective secure element, so that an asymmetric key pair is formed. The back up acknowledge message may also comprise hash value of backed up data.

The retrieval authentication request message further comprises challenge value, the retrieval authentication message further comprises result of calculation of the challenge and the retrieval data message further comprises data. The result of check message further comprises at least one of data and public key of the sending terminal.

To increase the willingness of a mobile terminal to provide memory for another mobile terminal to back up data, a reward system may be introduced. Every secure element holds a credit value. This credit value has an initial value which is provided by the TTP. When the receiving terminal accepts a back up request message the credit value is increased by a certain value. This value is determined by at least a base value and a value depending on the data size. The credit value of the receiving terminal can be also increased after responding to a retrieval request.

On the other hand, the credit value of the sending terminal is decreased at least by the same amount the credit value of the receiving terminal is increased when requesting a back up or upon the result of check message.

To increase the readiness of the mobile terminal which had backed up the data to retrieve the data again, a deposit value can be added to the credit value during the back up procedure, which is transferred back after the retrieval acknowledge message at the end of a retrieval procedure.

The above described features of the invention can be combined in any way as a whole or in part without departing from the scope of the disclosure of the invention.

These and other potential objects, features and advantages of the present invention will appear more fully from the following detailed description of preferred embodiments of the invention. It is to be understood, however, that the scope of the present invention is not limited to the given embodiments shown in the accompanying schematically drawings.
Fig. 1 schematically shows a back up phase,
Fig. 2 schematically shows a further back up phase,
Fig. 3 schematically shows a direct retrieval phase,
Fig. 4 schematically shows a further direct retrieval phase
Fig. 5 schematically shows a data forward for indirect retrieval, and
Fig. 6 schematically shows an indirect retrieval.

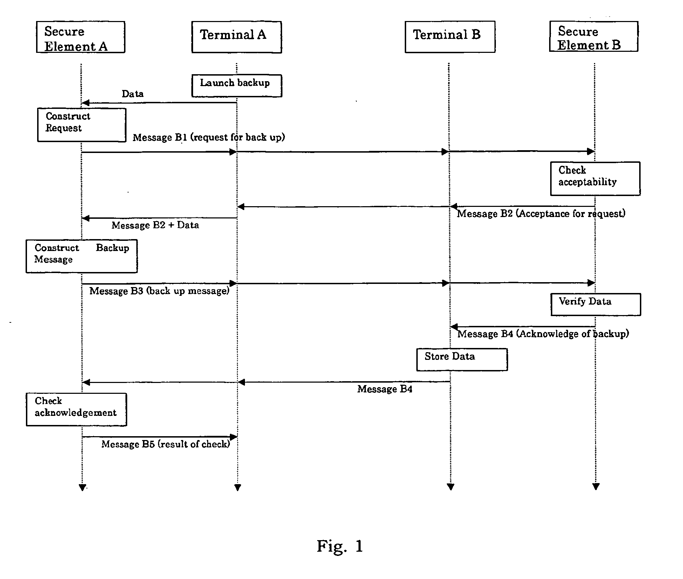

In Fig. 1, Terminal A is willing to be backup some data to neighbour Terminal B. Terminal A launches backup sequence by calling function B 1 of Secure Element A (SeA) and Terminal A also gives the data which it wants to be backed up. This would be done through the interface of Terminal A and Secure Element A.

SeA checks if there is enough credit. If there is enough credit, it constructs a request message B1 and returns the message to Terminal A. Message B 1 consists of MessageTypeID (here B1), transaction ID, size of the data, hash value of the data and MAC (Message Authentication Code) of the Message. The transaction ID is a unique ID to distinguish it from other sequences.

### Message B1: [B1, transaction ID, size of the data, hash, MAC]

Then Terminal A sends the message to Terminal B. Terminal B gives the message to Secure Element B (SeB) by calling function B2 of SeB, and SeB checks if Terminal B can accept the request. Here, major criteria would be if Terminal B has enough spare storage space to accept the data. If Terminal B can accept the request, SeB returns message B2. Message B2 consists of MessageTypeID (here B2), transaction ID, MAC of the message.

### Message B2: [B2, transaction ID, MAC]

Then Terminal B sends the message to Terminal A. Terminal A gives the message along with the data to SeA by calling function B3. SeA constructs Message B3 for backup. Message B3 consists of MessageTypeID (here B3), transaction ID, data to be back-upped, public key of Terminal A (Kpa) and MAC of the message. Kpa is a public half of asymmetric key pair of Terminal A.

### Message B3: [B3, transaction ID, data, Kpa, MAC]

Terminal B gives the message by calling function B4. SeB checks if a hash value calculated from the data contained in the Message B3 and the hash value contained in Message B1 are same. SeB constructs Message B4 to acknowledge of the backup, and returns the message. Message B4 consists of MessageTypeID (here B4), transaction ID, hash value of back-upped data and MAC of the message.

### Message B4: [B4, transaction ID, hash, MAC]

Also SeB increases its credit value by value B as a reward to cooperative data backup. Terminal B stores the data and sends Message B4 to Terminal A. Terminal A gives Message B4 by calling function B5. SeA checks the message and returns Message B5. Message B5 consists of MessageTypeID (here B5), transaction ID and MAC of the message.

### Message B5: [B5, transaction ID, MAC]

Also SeA decreases its credit value by value A as a cost for asking data backup. This is the final step of the back up phase.

When the mobile terminal is in need of the backed up data, the terminal can request retrieval of the data. In the retrieval phase, there would be two possibilities, one is direct retrieval and the other is indirect retrieval.

In case of direct retrieval, the mobile terminal would ask the data direct from the counter terminal which has accepted storing the data.

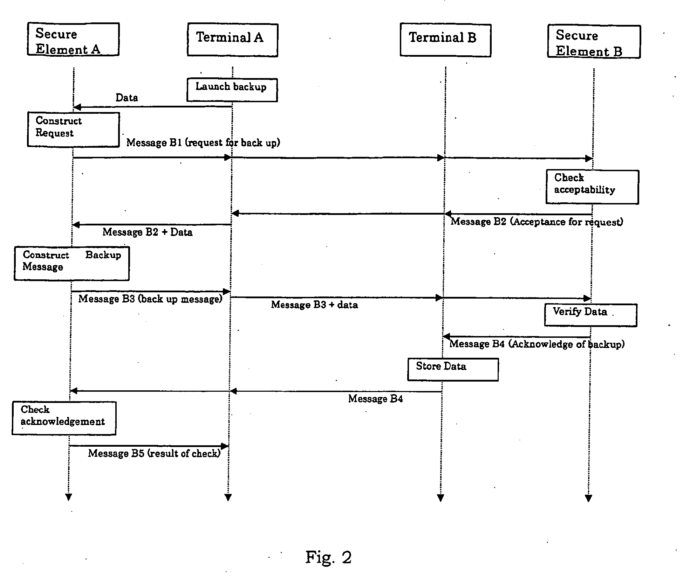

In Fig. 2 a similar phase to Fig. 1 is shown. However, in the phase of Fig. 2 Message B3 differs from Message B3 of Fig. 1 in that it does not include the data.

### Message B3: [B3, transaction ID, Kpa, MAC]

Then Terminal A sends B3 and the data to Terminal B. Terminal B gives the message and the data to SeB by calling function B4. SeB checks if a hash value calculated from the data transferred along with the Message B3 and the hash value contained in Message B 1 are same. This allows reducing the communication between the terminal and the secure element.

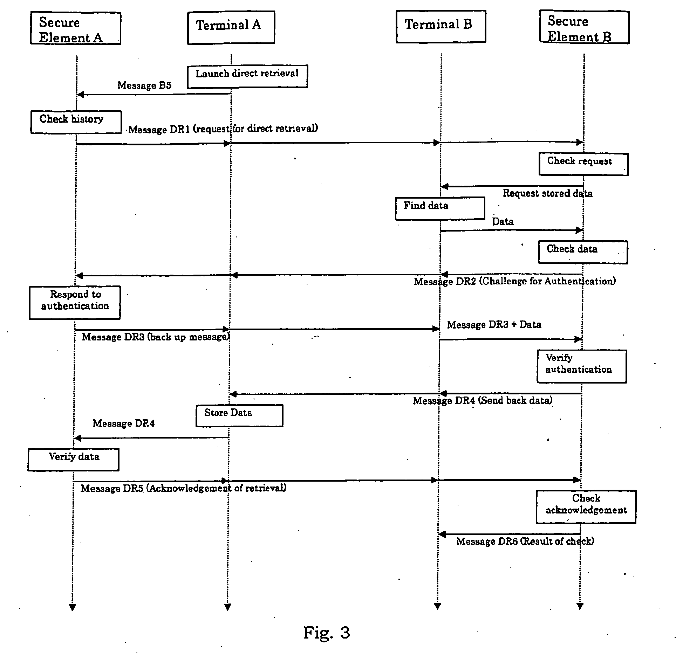

In Fig. 3, Terminal A launches direct retrieval by calling function DR1 of SeA. This would be done in different manners, but one possibility would be done by giving Message B5 corresponding to the data wanted to be retrieved. SeA checks if the retrieval request coincide with its backup history, and if it does, SeA constructs a retrieval message DR1, and returns the message to Terminal A. Message DR1 consists of MessageTypeID (here DR1), transaction ID and MAC of the Message.

### Message DR1: [DR1, transaction ID, MAC]

Terminal A sends it to Terminal B, and Terminal B gives the message to SeB by calling function DR2. SeB checks if the retrieval request coincides with its backup history, and if it does, SeB asks Terminal B to find the data. Terminal B finds the data from its storage then gives the data to SeB. SeB checks if the data has not changed, then construct message DR2. Message DR2 consists of Message TypeID (here DR2), transaction ID, challenge value and MAC of the message. The challenge value is an arbitrary value to check the Terminal A is the owner of the data.

Message DR2: [DR2, transaction ID, challenge, MAC]

The message is returned to Terminal B, and Terminal B sends it to Terminal A. Terminal A gives the message to SeA by calling function DR3. SeA calculate the challenge with secret key of Terminal A (Ksa). Ksa is a secret half of asymmetric key pair of Terminal A. Here we define the result of calculation of the challenge with Ksa as [challenge]Ksa. Then SeA constructs Message DR3. Message DR3 consists of MessageTypeID (here DR3), transaction ID, [challenge]Ksa and MAC of the message.

### Message DR3: [DR3, transaction ID, [challenge]Ksa, MAC]

The message is returned to Terminal A, and Terminal A sends it to Terminal B. Terminal B gives the message to SeB along with the data by calling function DR4. SeB check if the counter part is the owner of the data. In Message B3 of backup phase, SeB was informed Kpa. If Kpa and Ksa are pair of asymmetric key, from the nature of asymmetric key, calculation of [challenge]Ksa with Kpa should be again original challenge value. Describing in another notation, [[challenge]Ksa]Kpa = challenge. If this check is OK, that means Terminal A is the owner of the data. SeB constructs Message DR4. Message DR4 consists of MessageTypeID (here DR4), transaction ID, Data and MAC of the message.

### Message DR4: [DR4, transaction ID, data, MAC]

Also SeB increases its credit value by value C as a reward due to cooperative sending back of data. The message is returned to Terminal B, and Terminal B sends it to Terminal A. Terminal A stores the data to its storage, and gives the message to SeA by calling function DR5. SeA checks if the data has not changed, and if it's OK, SeA constructs message DR5. Message DR5 consists of MessageTypeID (here DR5), transactionID and MAC of the message.

### Message DR5: [DR5, transaction ID, MAC]

Also SeA increases its credit value by value D as a reward to cooperative data retrieval. The message is returned to Terminal A, and Terminal A sends it to Terminal B. Terminal B gives the message to SeB by calling function DR6. SeB checks the message and returns Message DR6. Message DR6 consists of MessageTypeID (here DR6), transaction ID and MAC of the message.

### Message DR6: [DR6, transaction ID, MAC]

This is the final step of the direct retrieval phase.

This direct retrieval is only available when the mobile terminal and the terminal which has accepted the back up are able to communicate directory. But it is difficult to expect such direct communication when the mobile terminal is in need of data retrieval.

Indirect retrieval doesn't require direct communication between the mobile terminal and the counter terminal, but it assumes existence of TTP infrastructure and connectivity to it. The counter terminal can forward the data to the TTP infrastructure, and the mobile terminal can retrieve the data from the TTP infrastructure. Indirect retrieval requires connectivity with TTP infrastructure, so it may be available when the mobile device goes back to its home office, etc.

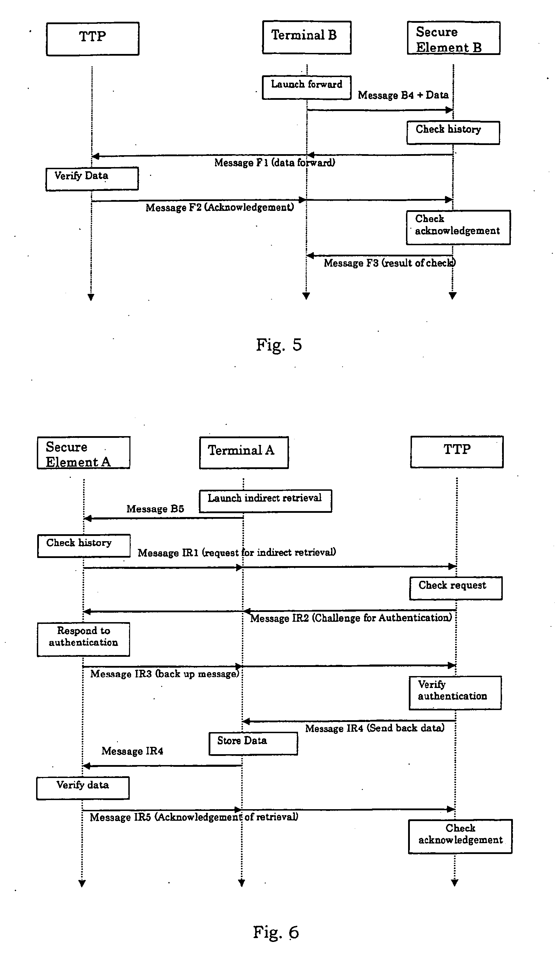

In Fig. 5, Terminal B launches data forward for indirect retrieval by calling function F1 of SeB. This would be done in different manners, but one possibility would be done by giving data wanted to be forwarded along with Message B4 corresponding to the data.

SeB checks if the forward request coincide with its backup history, and if it does, SeB constructs a forward message F1, and returns the message to Terminal B. Message F1 consists of MessageTypeID (here F1), transaction ID and MAC of the Message.

### Message F1: [F1, transaction ID, data, Kpa, MAC]

Terminal B sends it to TTP infrastructure, and the TTP verifies the message. If the verification is OK, the TTP constructs Message F2. Message F2 consists of MessageTypeID (here F2), transaction ID and MAC of the Message.

### Message F2: [F2, transaction ID, MAC]

The TTP sends the message to Terminal B, and Terminal B gives the message to SeB by calling function F3. SeB checks the message, and returns Message F3. Message F3 consists of MessageTypeID (here DR6), transaction ID and MAC of the message.

### Message F3: [F3, transaction ID, MAC]

Also SeB increases its credit value by value C as a reward to cooperative sending back data.
This is the final step of the forward.

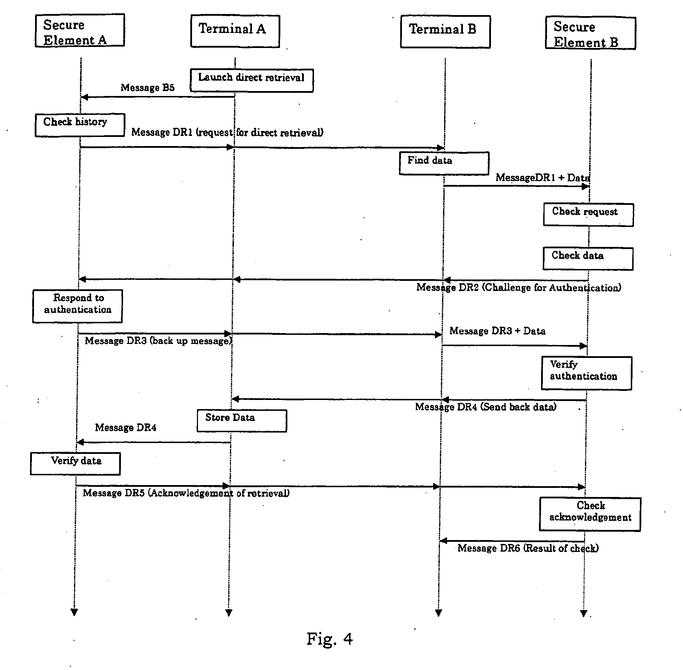

The phase shown Fig. 4 is similar to the phase shown in Fig. 3.
Terminal A sends the request DR1 to Terminal B, and Terminal B finds the data from its storage then gives the message and the data to SeB by calling function DR2. SeB checks if the retrieval request coincides with its backup history, and if it does, SeB checks if the data has not changed, then construct message DR2.

In Fig. 5, Terminal A launches indirect retrieval by calling function IR1 of SeA. The steps in Fig. 5 is almost coincide with steps in Fig. 3, but steps, which has been done by Terminal B and SeB in Fig.2, would be done by the TTP. In indirect retrieval, SeA increases its credit value by value D as a reward to cooperative data retrieval when verification of retrieved data is OK, it means before returning Message IR5. On the other hand, the TTP does nothing about credit value, even when the TTP sends back the backed up data.

In this description, relation between the changes of credit values can be as following:
A >= B + C + D, wherein B, C, D > 0, or
A = m*a, B = m*b, C = m*c, D = m*d, wherein a >= b + c +d, b, c, d > 0 and
m = function of the size of data

This means, in some implementations, changes of the credit value are constant irrespective of data size, and in other implementations, the changes of the credit value would depend on the size of backed up data.

Features and specific details of the structure of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. Method for backing up data between multiple mobile terminals comprising the steps of:
a) launching a back up request by calling a function by a sending terminal,
b) sending a back up request message (B1) including the size of the data to be backed up from the sending terminal to a receiving terminal,
c) sending a back up request acknowledge message (B2) comprising a transaction identification number from the receiving terminal to the sending terminal,
d) sending a back up data message (B3) comprising data to be backed up and the transaction identification number from the sending terminal to the receiving terminal,
e) storing the back up data message (B3) in the receiving terminal, and
f) sending a back up acknowledge message (B4) from the receiving terminal to the sending terminal.

2. Method according to claim 1, further comprising the step of generating the back up request message (B1) by the sending terminal.

3. Method according to claim 1 or 2, further comprising the step of checking if enough storage space is available to store the data based on the size of the data to be backed up indicated in the back up request message (B1) by the receiving terminal.

4. Method according to at least one of claims 1 to 3, further comprising the step of generating the back up request acknowledge message (B2) by the receiving terminal.

5. Method according to at least one of claims 1 to 4, further comprising the step of checking the request acknowledge message (B2) by the sending terminal.

6. Method according to at least one of claims 1 to 5, further comprising the step of generating the back up data message (B3) by the sending terminal.

7. Method according to at least one of claims 1 to 6, further comprising the step of verifying the back up message (B3) by the receiving terminal.

8. Method according to at least one of claims 1 to 7, further comprising the step of generating the back up acknowledge message (B4) by the receiving terminal.

9. Method according to at least one of claims 1 to 8, further comprising the step of checking the back up acknowledge message (B4) by the sending terminal.

10. Method according to at least one of claim 9, further comprising the step of generating a result of check message (B5) by the sending terminal indicating that said the step of checking the back up acknowledge message was successful.

11. Method according to one of the preceding claims, further comprising a retrieving procedure for retrieving data backed up according to at least one of the preceding claims between multiple mobile terminals, said retrieving procedure comprising the steps of:
a) launching a retrieval request by calling a function by a receiving terminal,
b) sending a retrieval request message (DR1) comprising a transaction identification number from the receiving terminal to a sending terminal,
c) sending a retrieval authentication request message (DR2) from the sending terminal to the receiving terminal,
d) sending a retrieval authentication message (DR3) comprising the transaction identification number from the receiving terminal to the sending terminal,
e) sending a retrieval data message (DR4) comprising the data to be retrieved and the transaction identification number from the sending terminal to the receiving terminal,
f) storing the retrieval data message in the receiving terminal, and
g) sending a retrieval acknowledge message (DR5) from the receiving terminal to the sending terminal.

12. Method according to claim 11, wherein the sending terminal sends authentication data which may be used to authenticate the sending terminal in the following retrieval phase to the receiving terminal when the sending terminal backs up data,
wherein the authentication data includes information used for authentication based on secret information managed in the sending terminal,
wherein the sending terminal is get authenticated based on the authentication data by the receiving terminal from which the sending terminal tries to retrieve the backed up data, and
wherein the retrieving of data is completed when the sending terminal passes the authentication.

13. Method according to claim 12, wherein the secret information managed in the sending terminal is managed in a secure element comprising a cryptographic processor.

14. Method according to claim 12, wherein the receiving terminal is connected to a trusted third party infrastructure and wherein the receiving terminal forwards the data backed up by the sending terminal to the trusted third party infrastructure
wherein the trusted third party infrastructure stores the data forwarded from the receiving terminal to its storage area,
wherein the receiving terminal forwards the authentication information to the infrastructure paired with the back up data,
wherein the sending terminal is connected with the trusted third party infrastructure, and the trusted third party infrastructure authenticates the sending terminal based on the authentication data, and
wherein the sending terminal retrieves the back up data form the infrastructure after the successful authentication of the sending terminal by the infrastructure.

15. Method according to claim 14, wherein said secure element of the receiving terminal internally manages at least an credit value of the terminal to which the element belongs, and
wherein the element increases the credit value when the receiving terminal receives the back up data, sends the back up data to the sending terminal and forwards the back up data to the infrastructure.

16. Method according to claim 13, wherein the sending terminal comprises a secure element comprising a cryptographic processor,
wherein the secure element of the sending terminal internally manages at least an credit value of the terminal to which the elements belongs,
wherein the element decreases the credit value when the sending terminal sends the back up data, and
wherein the secure element increases the credit value when the terminal retrieves the back up data.

17. Method according to at least one of claims 11 to 16, further comprising the step of checking the retrieval request message (DR1) by the sending terminal.

18. Method according to at least one of claims 11 to 17, further comprising the step of requesting data backed up in the sending terminal and verifying the backed up data.

19. Method according to at least one of claims 11 to 18, further comprising the step of generating the retrieval authentication request message (DR2) by the sending terminal.

20. Method according to at least one of claims 11 to 19, further comprising the step of responding the authentication request message (DR2) by the receiving terminal.

21. Method according to at least one of claims 11 to 20, further comprising the step of generating the retrieval authentication message (DR3) by the receiving terminal.

22. Method according to at least one of claims 11 to 21, further comprising the step of verifying the retrieval authentication message (DR3) by the sending terminal.

23. Method according to at least one of claims 11 to 22, further comprising the step of generating the retrieval data message (DR4) by the sending terminal.

24. Method according to at least one of claims 11 to 23, further comprising the step of verifying retrieval data message (DR4) by the receiving terminal.

25. Method according to at least one of claims 11 to 24, further comprising the step of a generating said retrieval acknowledge message (DR5) by the receiving terminal.

26. Method according to claim 25, further comprising the step of checking the retrieval acknowledge message (DR5) by the sending terminal.

27. Method according to claim 26, further comprising the step of a generating a result of check message (DR6) by the sending terminal indicating that said the step of checking the retrieval acknowledge message was successful.

28. Method according to at least one of the preceding claims, further comprising the forwarding of data between a terminal and a trusted third party infrastructure, said forwarding of data comprising the steps of:
a) launching a forward request by calling a function by a sending terminal,
b) sending a data forward message (F1) including the data to be forwarded from the sending terminal to the trusted third party infrastructure,
c) sending an acknowledge message (F2) comprising a transaction identification number from the trusted third party infrastructure to the sending terminal, and
d) sending a result of check message (F3) from the sending terminal to the trusted third party infrastructure.

29. Method according claim 28, further comprising the step of generating the data forward message (F1) by the sending terminal.

30. Method according at least one of claims 28 to 29, further comprising the step of verifying the data forward message (F1) by the trusted third party infrastructure.

31. Method according at least one of claims 28 to 30, further comprising the step of generating the acknowledge message (F2) by the trusted third party infrastructure.

32. Method according at least one of claims 28 to 31, further comprising the step of checking the acknowledge message (F2) by the sending terminal.

33. Method according to claims 28 to 32, further comprising the step of generating the result of check message (F3) by the sending terminal indicating that said the step of checking the acknowledge message was successful.

34. Method according to one of the preceding claims, further comprising a procedure for retrieving data between a terminal and a trusted third party infrastructure, said procedure for retrieving data comprising the steps of:
a) launching a retrieval request by calling a function by a receiving terminal,
b) sending a retrieval request message (IR1) from the receiving terminal to the trusted third party infrastructure,
c) sending a retrieval authentication request message (IR2) from the trusted third party infrastructure to the receiving terminal,
d) sending a back up request message (IR3) from the receiving terminal to the trusted third party infrastructure,
e) sending a back up data message (IR4) comprising data to be retrieved from the trusted third party infrastructure to the receiving terminal,
f) storing the back up data message in the receiving terminal, and
g) sending a retrieval acknowledge message (IR5) from the receiving terminal to the trusted third party infrastructure.

35. Method according claim 34, further comprising the step of generating the retrieval request message (IR1) by the receiving terminal.

36. Method according to at least one of claims 34 to 35, further comprising the step of checking the retrieval request message (IR1) by the trusted third party infrastructure.

37. Method according to at least one of claims 34 to 36, further comprising the step of generating the retrieval authentication request message (IR2) by the trusted third party infrastructure.

38. Method according to at least one of claims 34 to 37, further comprising the step of responding the authentication request message (IR2) by the receiving terminal.

39. Method according to at least one of claims 34 to 38, further comprising the step of generating the back up request message (IR3) by the receiving terminal.

40. Method according to at least one of claims 34 to 39, further comprising the step of verifying the retrieval authentication message (IR3) by the trusted third party infrastructure.

41. Method according to at least one of claims 34 or 40, further comprising the step of generating the back up data message (IR4) by the trusted third party infrastructure.

42. Method according to at least one of claims 34 to 41, further comprising the step of verifying the retrieval data message (IR4) by the receiving terminal.

43. Method according to at least one of claims 34 to 42, further comprising the step of generating the retrieval acknowledge message (IR5) by the receiving terminal.

44. Method according to at least one of claims 34 to 43, further comprising the step of checking acknowledgment of the retrieval acknowledge message (IR5) by the trusted third party infrastructure.

45. Method according to at least one of the preceding claims, wherein at least one of the steps is executed by a secure element comprising a cryptographic processor connected to the respective terminal.

46. Method according to at least one of the preceding claims, further including a step of increasing credit value of the receiving terminal after accepting a back up request message (B1).

47. Method according to at least one of the preceding claims, further including a step of increasing credit value of the receiving terminal after responding to a retrieval request.

48. Method according to at least one of the preceding claims, further including a step of decreasing credit value of the sending terminal upon receiving the result of check message (B5).

49. Method according to at least one of the preceding claims, further including a step of increasing a credit value by a deposit value after the reception of a retrieval acknowledge message (DR5, IR5).

50. System for back up and retrieval of data between multiple mobile terminals comprising:
a sending terminal with data to be backed up,
a back up request message generating means for generating a back up request message (B1) including the size of the data to be backed up,
a back up data message generating means for generating a back up data message (B3) comprising data to be bracked up and a transaction identification number,
a receiving terminal for receiving data to be backed up,
a back up request acknowledge message generating means for generating a back up request acknowledge message (B2) comprising the transaction identification number,
a back up acknowledge message generating means for generating a back up acknowledge message (B4),
at least a secure element comprising a cryptographic processor connected with the respective terminal during message generation, and
a communication connection between the sending terminal and the receiving terminal for transmitting messages and data.

51. System according to claim 50, wherein the communication connection between the sending terminal and the receiving terminal comprises a trusted third party infrastructure.

52. System according to claim 51, wherein the backed up data is stored in the trusted third party infrastructure.

53. System according to claim 51 or 52, wherein the backed up data is retrieved from the trusted third party infrastructure.

54. System according to at least one of claims 50 to 53, wherein the secure element is a smartcard.

## Patentansprüche

1. Verfahren zum Sichern von Daten zwischen mehreren Mobilengeräten, das die folgenden Schritte umfasst:
a) Absetzen einer Sicherungsanforderung durch Aufrufen einer Funktion durch ein sendendes Endgerät,
b) Senden einer Sicherungsanforderungsnachricht (B1) einschließlich der Größe der zu sichernden Daten von dem sendenden Endgerät zu einem empfangenden Endgerät,
c) Senden einer Sicherungsanfordez ungs-Quittierungsnachxicht (B2), die eine Transaktionskennnummer enthält, von dem empfangenden Endgerät zu dem sendenden Endgerät,
d) Senden einer Sicherungsdatennachricht (B3), die zu sichernde Daten und die Transaktionskennnummer enthält, von dem sendenden Endgerät zu dem empfangenden Endgerät,
e) Speichern der Sicherungsdatennachricht (B3) in dem empfangenden Endgerät und
f) Senden einer Sicherungsquittierungsnachricht (B4) von dem empfangenden Endgerät zu dem sendenden Endgerät.

2. Verfahren nach Anspruch 1, das ferner den Schritt des Erzeugens der Sicherungsanforderungsnachricht (B1) durch das sendende Endgerät umfasst.

3. Verfahren nach Anspruch 1 oder 2, das ferner den Schritt des Prüfens, ob genügend Speicherraum verfügbar ist, um die Daten zu speichern, anhand der Größe der zu sichernden Daten, die in der Sicherungsanforderungsnachricht (B1) angegeben wird, durch das empfangende Endgerät umfasst.

4. Verfahren nach wenigstens einem der Ansprüche 1 bis 3, das ferner den Schritt des Erzeugens der SicherungsanforderungsQuittierungsnachricht (B2) durch das empfangende Endgerät umfasst.

5. Verfahren nach wenigstens einem der Ansprüche 1 bis 4, das ferner den Schritt des Prüfens der Anforderungsquittierungsnachricht (B2) durch das sendende Endgerät umfasst.

6. Verfahren nach wenigstens einem der Ansprüche 1 bis 5, das ferner den Schritt des Erzeugens der Sicherungsdatennachricht (B3) durch das sendende Endgerät umfasst.

7. Verfahren nach wenigstens einem der Ansprüche 1 bis 6, das ferner den Schritt des Verifizierens der Sicherungsnachricht (B3) durch das empfangende Endgerät umfasst.

8. Verfahren nach wenigstens einem der Ansprüche 1 bis 7, das ferner den Schritt des Erzeugens der Sicherungsquittierungsnachricht (B4) durch das empfangende Endgerät umfasst.

9. Verfahren nach wenigstens einem der Ansprüche 1 bis 8, das ferner den Schritt des Prüfens der Sicherungsquittierungsnachricht (B4) durch das sendende Endgerät umfasst.

10. Verfahren nach Anspruch 9, das ferner den Schritt des Erzeugens einer Prüfergebnisnachricht (B5) durch das sendende Endgerät, die angibt, dass der Schritt des Prüfens der Sicherungsquittierungsnachricht erfolgreich war, umfasst.

11. Verfahren nach einem der vorhergehenden Ansprüche, das ferner eine Wiedergewinnungsprozedur umfasst, um Daten wiederzugewinnen, die gemäß wenigstens einem der vorhergehenden Ansprüche zwischen mehreren mobilen Endgeräten gesichert worden sind, wobei die Wiedergewinnungsprozedur die folgenden Schritte umfasst:
a) Absetzen einer Wiedergewinnungsanforderung durch Aufrufen einer Funktion durch ein empfangendes Endgerät,
b) Senden einer Wiedergewinnungsanforderungsnachricht (DR1), die eine Transaktionskennnummer enthält, von dem empfangenden Endgerät zu einem sendenden Endgerät,
c) Senden einer Wiedergewinnungsauthentifizierungs-Anforderungsnachricht (DR2) von dem sendenden Endgerät zu dem empfangenden Endgerät,
d) Senden einer Wiedergewinnungsauthentifizierungsnachricht (DR3), die die Transaktionskennnummer enthält, von dem empfangenden Endgerät zu dem sendenden Endgerät,
e) Senden einer Wiedergewinnungsdatennachricht (DR4), die die wiederzugewinnenden Daten und die Transaktionsidentifizierungsnummer enthält, von dem sendenden Endgerät zu dem empfangenden Endgerät,
f) Speichern der Wiedergewinnungsdatennachricht in dem empfangenden Endgerät und
g) Senden einer Wiedergewinnungsquittierungsnachricht (DR5) von dem empfangenden Endgerät zu dem sendenden Endgerät.

12. Verfahren nach Anspruch 11, wobei das sendende Endgerät Authentifizierungsdaten, die verwendet werden können, um das sendende Endgerät in der folgenden Wiedergewinnungsphase zu authentifizieren, zu dem empfangenden Endgerät sendet, wenn das sendende Endgerät Daten sichert,
wobei die Authentifizierungsdaten Informationen enthalten, die für die Authentifizierung anhand geheimer Informationen, die in dem sendenden Endgerät gemanagt werden, verwendet werden,
wobei das sendende Endgerät anhand der Authentifizierungsdaten durch das empfangende Endgerät, von dem das sendende Endgerät versucht, die gesicherten Daten wiederzugewinnen, authentifiziert wird, und
wobei die Wiedergewinnung von Daten abgeschlossen ist, wenn das sendende Endgerät die Authentifizierung genehrnigt.

13. Verfahren nach Anspruch 12, wobei die geheimen Informationen, die in dem sendenden Endgerät gemanagt werden, in einem gesicherten Element gemanagt werden, das einen Kryptographieprozessor enthält.

14. Verfahren nach Anspruch 12, wobei das empfangende Endgerät mit einer vertraulichen Dritt-Infrastruktur verbunden ist und wobei das empfangende Endgerät die durch das sendende Endgerät gesicherten Daten zu der vertraulichen Dritt-Infrastruktur weiterleitet,
wobei die vertrauliche Dritt-Infrastruktur die von dem empfangenden Endgerät weitergeleiteten Daten in ihrem Speicherbereich speichert,
wobei das empfangende Endgerät die Authentifizierungsinformationen zusammen mit den gesicherten Daten zu der Infrastruktur weiterleitet,
wobei das sendende Endgerät mit der vertraulichen Dritt-Infrastruktur verbunden wird und die vertrauliche Dritt-Infrastruktur das sendende Endgerät anhand der Authentifizierungsdaten authentifiziert, und
wobei das sendende Endgerät die Sicherungsdaten von der Infrastruktur nach der erfolgreichen Authentifizierung des sendenden Endgeräts durch die Infrastruktur wiedergewinnt.

15. Verfahren nach Anspruch 14, wobei das gesicherte Element des empfangenden Endgeräts intern wenigstens einen Kreditwert des Endgeräts, zu dem das Element gehört, managt und
wobei das Element den Kreditwert erhöht, wenn das empfangende Endgerät die Sicherungsdaten empfängt, die Sichez-ungsdaten zu dem sendenden Endgerät sendet und die Sicherungsdaten zu der Infrastruktur weiterleitet.

16. Verfahren nach Anspruch 13, wobei das sendende Endgerät ein gesichertes Element umfasst, das einen Kryptographieprozessor enthält,
wobei das gesicherte Element des sendenden Endgeräts wenigstens einen Kreditwert des Endgeräts, zu dem das Element gehört, intern managt,
wobei das Element den Kreditwert erniedrigt, wenn das sendende Endgerät die Sicherungsdaten sendet, und
wobei das gesicherte Element den Kreditwert erhöht, wenn das Endgerät die Sichez-ungsdaten wiedergewinnt.

17. Verfahren nach wenigstens einem der Ansprüche 11 bis 16, das ferner den Schritt des Prüfens der Wiedergewinnungsanforderungsnachricht (DR1) durch das sendende Endgerät umfasst.

18. Verfahren nach wenigstens einem der Ansprüche 11 bis 17, das ferner den Schritt des Anforderns von im sendenden Endgerät gesicherten Daten und das Verifizieren der gesicherten Daten umfasst.

19. Verfahren nach wenigstens einem der Ansprüche 11 bis 18, das ferner den Schritt des Erzeugens der Wiedergewinnungsauthentifizierungs-Anforderungsnachricht (DR2) durch das sendende Endgerät umfasst.

20. Verfahren nach wenigstens einem der Ansprüche 11 bis 19, das ferner den Schritt des Antwortens auf die Authentifizierungsanforderungsnachricht (DR2) durch das empfangende Endgerät umfasst.

21. Verfahren nach wenigstens einem der Ansprüche 11 bis 20, das ferner den Schritt des Erzeugens der Wiedergewinnungsauthentifizierungsnachricht (DR3) durch das empfangende Endgerät umfasst.

22. Verfahren nach wenigstens einem der Ansprüche 11 bis 21, das ferner den Schritt des Verifizierens der Wiedergewinnungsauthentifizierungsnachricht (DR3) durch das sendende Endgerät umfasst.

23. Verfahren nach wenigstens einem der Ansprüche 11 bis 22, das ferner den Schritt des Erzeugens der Wiedergewinnungsdatexxnachricht (DR4) durch das sendende Endgerät umfasst.

24. Verfahren nach wenigstens einem der Ansprüche 11 bis 23, das ferner den Schritt des Verifizierens der Wiedergewinnungsdatennachricht (DR4) durch das empfangende Endgerät umfasst.

25. Verfahren nach wenigstens einem der Ansprüche 11 bis 24, das ferner den Schritt des Erzeugens der Wiedergewinnungsquittierungsnachricht (DR5) durch das empfangende Endgerät umfasst.

26. Verfahren nach Anspruch 25, das ferner den Schritt des Prüfens der Wiedergewinnungsquittierungsnachricht (DR5) durch das sendende Endgerät umfasst.

27. Verfahren nach Anspruch 26, das ferner den Schritt des Erzeugens einer Prüfergebnisnachricht (DR6) durch das sendende Endgerät, die angibt, dass der Schritt des Prüfens der Wiedergewinnungsquittierungsnachricht erfolgreich war, umfasst.

28. Verfahren nach wenigstens einem der vorhergehenden Ansprüche, das ferner das Weiterleiten von Daten zwischen einem Endgerät und einer vertraulichen Dritt-Infrastruktur umfasst, wobei das Weiterleiten von Daten die folgenden Schritte umfasst,:
a) Absetzen einer Weiterleitungsanforderung durch Aufrufen einer Funktion durch ein sendendes Endgerät,
b) Senden einer Datenweiterleitungsnachricht (F1), die die weiterzuleitenden Daten enthält, von dem sendenden Endgerät zu der vertraulichen Dritt-Infrastruktur,
c) Senden einer Quittierungsnachricht (F2), die eine Transaktionskennnummer enthält, von der vertraulichen Dritt-Infrastruktur zu dem sendenden Endgerät und
d) Senden einer Prüfergebnisnachricht (F3) von dem sendenden Endgerät zu der vertraulichen Dritt-Infrastruktur.

29. Verfahren nach Anspruch 28, das ferner den Schritt des Erzeugens der Datenweiterleitungsnachricht (F1) durch das sendende Endgerät umfasst.

30. Verfahren nach wenigstens einem der Ansprüche 28 bis 29, das ferner den Schritt des Verifizierens der Datenweiterleitungsnachricht (F1) durch die vertrauliche Dritt-Infrastruktur umfasst.

31. Verfahren nach wenigstens einem der Ansprüche 28 bis 30, das ferner den Schritt des Erzeugens der Quittierungsnachricht (F2) durch die vertrauliche Dritt-Infrastruktur umfasst.

32. Verfahren nach wenigstens einem der Ansprüche 28 bis 31, das ferner den Schritt des Prüfens der Quittierungsnachricht (F2) durch das sendende Endgerät umfasst.

33. Verfahren nach den Ansprüchen 28 bis 32, das ferner den Schritt des Erzeugens der Prüfergebnisnachricht (F3) durch das sendende Endgerät, die angibt, dass der Schritt des Prüfens der Quittierungsnachricht erfolgreich war, umfasst.

34. Verfahren nach einem der vorhergehenden Ansprüche, das ferner eine Prozedur zum Wiedergewinnen von Daten zwischen einem Endgerät und einer vertraulichen Dritt-Infrastruktur umfasst, wobei die Prozedur zum Wiedergewinnen von Daten die folgenden Schritte umfasst:
a) Absetzen einer Wiedergewinnungsanforderung durch Aufrufen einer Funktion durch ein empfangendes Endgerät,
b) Senden einer Wiedergewinnungsanforderungsnachricht (IR1) von dem empfangenden Endgerät zu der vertraulichen Dritt-Infrastruktur,
c) Senden einer Wiedergewinnungsauthentifizierungs-Anforderungsnachricht (IR2) von der vertraulichen Dritt-Infrastruktur zu dem empfangenden Endgerät,
d) Senden einer Sicherungsanforderungsnachricht (IR3) von dem empfangenden Endgerät zu der vertraulichen Dritt-Infrastruktur,
e) Senden einer Sicherungsdatennachricht (IR4), die wiederzugewinnende Daten enthält, von der vertraulichen Dritt-Infrastruktur zu dem empfangenden Endgerät,
f) Speichern der Sicherungsdatennachricht in dem empfangenden Endgerät und
g) Senden einer Wiedergewinnungsquittierungsnachricht (IR5) von dem empfangenden Endgerät zu der vertraulichen Dritt-Infrastruktur.

35. Verfahren nach Anspruch 34, das ferner den Schritt des Erzeugens der Wiedergewinnungsanforderungsnachricht (IRI) durch das empfangende Endgerät umfasst.

36. Verfahren nach wenigstens einem der Ansprüche 34 bis 35, das ferner den Schritt des Prüfens der Wiedergewinnungsanforderungsnachricht (IR1) durch die vertrauliche Dritt-Infrastruktur umfasst.

37. Verfahren nach wenigstens einem der Ansprüche 34 bis 36, das ferner den Schritt des Erzeugens der Wiedergewinnungsauthentifizierungs-Anforderungsnachricht (IR2) durch die vertrauliche Dritt-Infrastruktur umfasst.

38. Verfahren nach wenigstens einem der Ansprüche 34 bis 37, das ferner den Schritt des Antwortens auf die Authentifizierungsanforderungsnachricht (IR2) durch das empfangende Endgerät umfasst.

39. Verfahren nach wenigstens einem der Ansprüche 34 bis 38, das ferner den Schritt des Erzeugens der Sicherungsanforderungsnachricht (IR3) durch das empfangende Endgerät umfasst.

40. Verfahren nach wenigstens einem der Ansprüche 34 bis 39, das ferner den Schritt des Verifizierens der Wiedergewinnungsauthentifizierungsnachricht (IR3) durch die vertraulichen Dritt-Infrastruktur umfasst.

41. Verfahren nach wenigstens einem der Ansprüche 34 oder 40, das ferner den Schritt des Erzeugens der Sicherungsdatennachricht (IR4) durch die vertrauliche Dritt-Infrastruktur umfasst.

42. Verfahren nach wenigstens einem der Ansprüche 34 bis 41, das ferner den Schritt des Verifizierens der Wiedergerwinnungsdatennachricht (IR4) durch das empfangende Endgerät umfasst.

43. Verfahren nach wenigstens einem der Ansprüche 34 bis 42, das ferner den Schritt des Erzeugens der Wiedergewinnungsquittierungsnachricht (IR5) durch das empfangende Endgerät umfasst.

44. Verfahren nach wenigstens einem der Ansprüche 34 bis 43, das ferner den Schritt des Prüfens der Quittierung der Wiedergewinnungsquittierungsnachricht (IR5) durch die vertrauliche Dritt-Infrastruktur umfasst.

45. Verfahren nach wenigstens einem der vorhergehenden Ansprüche, wobei wenigstens einer der Schritte durch ein gesichertes Element ausgeführt wird, das einen Kryptographieprozessor enthält, der mit dem jeweiligen Endgerät verbunden ist.

46. Verfahren nach wenigstens einem der vorhergehenden Ansprüche, das ferner einen Schritt des Erhöhens eines Kreditwerts des empfangenden Endgeräts nach dem Akzeptieren einer Sicherungsanforderungsnachricht (B1) umfasst.

47. Verfahren nach wenigstens einem der vorhergehenden Ansprüche, das ferner einen Schritt zum Erhöhen des Kreditwerts des empfangenden Endgeräts nach dem Antworten auf eine Wiedergewinnungsanforderung umfasst.

48. Verfahren nach wenigstens einem der vorhergehenden Ansprüche, das ferner einen Schritt des Erniedrigens einer Kreditwerts des sendenden Endgeräts bei Empfang der Prüfergebnisnachricht (B5) umfasst.

49. Verfahren nach wenigstens einem der vorhergehenden Ansprüche, das ferner einen Schritt des Erhöhens eines Kreditwerts um einen Guthabenwert nach dem Empfang einer Wiedergewinnungsquittierungsnachricht (DR5, IR5) umfasst.

50. System zum Sichern und Wiedergewinnen von Daten zwischen mehreren mobilen Endgeräten, das umfasst:
ein sendendes Endgerät mit zu sichernden Daten,
ein Sicherungsanforderungsnachricht-Erzeugungsmittel, um eine Sicherungsanforderungsnachricht (B1) zu erzeugen, die die Größe der zu sichernden Daten enthält,
ein Sicherungsdatennachricht-Erzeugungsmittel, um eine Sicherungsdatennachricht (B3) zu erzeugen, die zu sichernde Daten und eine Transaktionskennnummer enthält,
ein empfangendes Endgerät, um zu sichernde Daten zu empfangen,
eine Sicherungsanforderungsquittierungsnachricht-Erzeugungsmittel, um eine Sicherungsanforderungsquittierungsnachricht (B2), die die Transaktionskennnummer enthält, zu erzeugen,
ein Sicherungsquittierungsnachricht-Erzeugungsmittel, um ein Sicherungsquittierungsnachricht (B4) zu erzeugen,
wenigstens ein gesichertes Element, das einen Kryptographieprozessor enthält, der mit dem jeweiligen Endgerät während der Nachrichtenerzeugung verbunden ist, und
eine Kommunikationsverbindung zwischen dem sendenden Endgerät und dem empfangenden Endgerät, um Nachrichten und Daten zu senden.

51. System nach Anspruch 50, wobei die Kommunikationsverbindung zwischen dem sendenden Endgerät und dem empfangenden Endgerät eine vertrauliche Dritt-Infrastruktur umfasst.

52. System nach Anspruch 51, wobei die gesicherten Daten in der vertraulichen Dritt-Infrastruktur gespeichert werden.

53. System nach Anspruch 51 oder 52, wobei die gesicherten Daten von der vertraulichen Dritt-Infrastruktur wiedergewonnen werden.

54. System nach wenigstens einem der Ansprüche 50 bis 53, wobei das gesicherte Element eine Smartcard ist.

## Revendications

1. Procédé de sauvegarde de données entre plusieurs terminaux mobiles comprenant les étapes de :
a) lancement d'une demande de sauvegarde en appelant une fonction à l'aide d'un terminal d'envoi,
b) envoi d'un message de demande de sauvegarde (B1) incluant la taille des données à sauvegarder depuis le terminal d'envoi vers un terminal de réception,
c) envoi d'un message d'accusé de réception de demande de sauvegarde (B2) comprenant un numéro d'identification de transaction depuis le terminal de réception vers le terminal d'envoi,
d) envoi d'un message de données de sauvegarde (B3) comprenant les données à sauvegarder et le numéro d'identification de transaction depuis le terminal d'envoi vers le terminal de réception,
e) stockage du message de données de sauvegarde (B3) dans le terminal de réception, et
f) envoi d'un message d'accusé de réception de sauvegarde (B4) depuis le terminal de réception vers le terminal d'envoi.

2. Procédé selon la revendication 1, comprenant en outre l'étape de génération du message de demande de sauvegarde (B1) par le terminal d'envoi.

3. Procédé selon la revendication 1 ou 2, comprenant en outre l'étape de contrôle par le terminal de réception pour savoir si un espace de stockage suffisant est disponible pour stocker les données sur la base de la taille des données à sauvegarder indiquées dans le message de demande de sauvegarde (B1).

4. Procédé selon au moins l'une des revendications 1 à 3, comprenant en outre l'étape de génération du message d'accusé de réception de demande de sauvegarde (B2) par le terminal de réception.

5. Procédé selon au moins l'une des revendications 1 à 4, comprenant en outre l'étape de contrôle du message d'accusé de réception de demande (B2) par le terminal d'envoi.

6. Procédé selon au moins l'une des revendications 1 à 5, comprenant en outre l'étape de génération du message de données de sauvegarde (B3) par le terminal d'envoi.

7. Procédé selon au moins l'une des revendications 1 à 6, comprenant en outre l'étape de vérification du message de sauvegarde (B3) par le terminal de réception.

8. Procédé selon au moins l'une des revendications 1 à 7, comprenant en outre l'étape de génération du message d'accusé de réception de sauvegarde (B4) par le terminal de réception.

9. Procédé selon au moins l'une des revendications 1 à 8, comprenant en outre l'étape de contrôle du message d'accusé de réception de sauvegarde (B4) par le terminal d'envoi.

10. Procédé selon la revendication 9, comprenant en outre l'étape de génération d'un résultat de message de contrôle (B5) par le terminal d'envoi indiquant que ladite étape de contrôle du message d'accusé de réception de sauvegarde a réussi.

11. Procédé selon l'une des revendications précédentes, comprenant en outre une procédure d'extraction permettant d'extraire les données sauvegardées selon au moins l'une des revendications précédentes entre plusieurs terminaux mobiles, ladite procédure d'extraction comprenant les étapes de :
a) lancement d'une demande d'extraction en appelant une fonction à l'aide d'un terminal de réception,
b) envoi d'un message de demande d'extraction (DR1) comprenant un numéro d'identification de transaction depuis le terminal de réception vers un terminal d'envoi,
c) envoi d'un message de demande d'authentification d'extraction (DR2) depuis le terminal d'envoi vers le terminal de réception,
d) envoi d'un message d'authentification d'extraction (DR3) comprenant le numéro d'identification de transaction depuis le terminal de réception vers le terminal d'envoi,
e) envoi d'un message de données d'extraction (DR4) comprenant les données à extraire et le numéro d'identification de transaction depuis le terminal d'envoi vers le terminal de réception,
f) stockage du message de données d'extraction dans le terminal de réception et
g) envoi d'un message d'accusé de réception d'extraction (DR5) depuis le terminal de réception vers le terminal d'envoi.

12. Procédé selon la revendication 11, dans lequel le terminal d'envoi envoie au terminal de réception des données d'authentification qui peuvent être utilisées pour authentifier le terminal d'envoi lors de la phase d'extraction suivante quand le terminal d'envoi sauvegarde les données,
dans lequel les données d'authentification incluent des informations utilisées pour l'authentification sur la base d'informations secrètes gérées dans le terminal d'envoi,
dans lequel le terminal d'envoi est authentifié sur la base des données d'authentification par le terminal de réception à partir duquel le terminal d'envoi essaie d'extraire les données sauvegardées,et
dans lequel l'extraction de données est réalisée quand le terminal d'envoi réussit l'authentification.

13. Procédé selon la revendication 12, dans lequel les informations secrètes gérées dans le terminal d'envoi sont gérées dans un élément sécurisé comprenant un processeur cryptographique.

14. Procédé selon la revendication 12, dans lequel le terminal de réception est connecté à une infrastructure tierce de confiance et dans lequel le terminal de réception transmet les données sauvegardées par le terminal d'envoi à l'infrastructure tierce de confiance,
dans lequel l'infrastructure tierce de confiance stocke les données transmises à partir du terminal de réception dans sa zone de stockage,
dans lequel le terminal de réception transmet les informations d'authentification à l'infrastructure associée aux données de sauvegarde,
dans lequel le terminal d'envoi est connecté à l'infrastructure tierce de confiance et l'infrastructure tierce de confiance authentifie le terminal d'envoi sur la base des données d'authentification, et
dans lequel le terminal d'envoi extrait les données de sauvegarde de l'infrastructure après l'authentification réussie du terminal d'envoi par l'infrastructure.

15. Procédé selon la revendication 14, dans lequel ledit élément sécurisé du terminal de réception gère de manière interne au moins une valeur de crédit du terminal auquel l'élément appartient, et
dans lequel l'élément augmente la valeur de crédit quand le terminal de réception reçoit les données de sauvegarde, envoie les données de sauvegarde au terminal d'envoi et transmet les données de sauvegarde à l'infrastructure.

16. Procédé selon la revendication 13, dans lequel le terminal d'envoi comprend un élément sécurisé comprenant un processeur cryptographique,
dans lequel l'élément sécurisé du terminal d'envoi gère de manière interne au moins une valeur de crédit du terminal auquel l'élément appartient,
dans lequel l'élément diminue la valeur de crédit quand le terminal d'envoi envoie les données de sauvegarde, et
dans lequel l'élément sécurisé augmente la valeur de crédit quand le terminal extrait les données de sauvegarde.

17. Procédé selon au moins l'une des revendications 11 à 16, comprenant en outre l'étape de contrôle du message de demande d'extraction (DR1) par le terminal d'envoi.

18. Procédé selon au moins l'une des revendications 11 à 17, comprenant en outre l'étape de demande de données sauvegardées dans le terminal d'envoi et de vérification des données sauvegardées.

19. Procédé selon au moins l'une des revendications 11 à 18, comprenant en outre l'étape de génération du message de demande d'authentification d'extraction (DR2) par le terminal d'envoi.

20. Procédé selon au moins l'une des revendications 11 à 19, comprenant en outre l'étape de réponse au message de demande d'authentification (DR2) par le terminal de réception.

21. Procédé selon au moins l'une des revendications 11 à 20, comprenant en outre l'étape de génération du message d'authentification d'extraction (DR3) par le terminal de réception.

22. Procédé selon au moins l'une des revendications 11 à 21, comprenant en outre l'étape de vérification du message d'authentification d'extraction (DR3) par le terminal d'envoi.

23. Procédé selon au moins l'une des revendications 11 à 22, comprenant en outre l'étape de génération du message de données d'extraction (DR4) par le terminal d'envoi.

24. Procédé selon au moins l'une des revendications 11 à 23, comprenant en outre l'étape de vérification du message de données d'extraction (DR4) par le terminal de réception.

25. Procédé selon au moins l'une des revendications 11 à 24, comprenant en outre l'étape de génération dudit message d'accusé de réception d'extraction (DR5) par le terminal de réception.

26. Procédé selon la revendication 25, comprenant en outre l'étape de contrôle du message d'accusé de réception d'extraction (DR5) par le terminal d'envoi.

27. Procédé selon la revendication 26, comprenant en outre l'étape de génération d'un résultat de message de contrôle (DR6) par le terminal d'envoi indiquant que ladite étape de contrôle du message d'accusé de réception d'extraction a réussi.

28. Procédé selon au moins l'une des revendications précédentes, comprenant en outre la transmission de données entre un terminal et une infrastructure tierce de confiance, ladite transmission de données comprenant les étapes de :
a) lancement d'une demande de transmission en appelant une fonction à l'aide d'un terminal d'envoi,
b) envoi d'un message de transmission de données (F1) incluant les données à transmettre du terminal d'envoi vers l'infrastructure tierce de confiance,
c) envoi d'un message d'accusé de réception (F2) comprenant un numéro d'identification de transaction depuis l'infrastructure tierce de confiance vers le terminal d'envoi ; et
d) envoi d'un résultat de message de contrôle (F3) depuis le terminal d'envoi vers l'infrastructure tierce de confiance.

29. Procédé selon la revendication 28, comprenant en outre l'étape de génération du message de transmission de données (F1) par le terminal d'envoi.

30. Procédé selon au moins l'une des revendications 28 à 29, comprenant en outre l'étape de vérification du message de transmission de données (F1) par l'infrastructure tierce de confiance.

31. Procédé selon au moins l'une des revendications 28 à 30, comprenant en outre l'étape de génération du message d'accusé de réception (F2) par l'infrastructure tierce de confiance.

32. Procédé selon au moins l'une des revendications 28 à 31, comprenant en outre l'étape de contrôle du message d'accusé de réception (F2) par le terminal d'envoi.

33. Procédé selon au moins l'une des revendications 28 à 32, comprenant en outre l'étape de génération du résultat de message de contrôle (F3) par le terminal d'envoi indiquant que ladite étape de contrôle du message d'accusé de réception a réussi.

34. Procédé selon l'une des revendications précédentes, comprenant en outre une procédure d'extraction de données entre un terminal et une infrastructure tierce de confiance, ladite procédure d'extraction de données comprenant les étapes de :
a) lancement d'une demande d'extraction en appelant une fonction à l'aide d'un terminal de réception,
b) envoi d'un message de demande d'extraction (IR1) depuis le terminal de réception vers l'infrastructure tierce de confiance,
c) envoi d'un message de demande d'authentification d'extraction (IR2) depuis l'infrastructure tierce de confiance vers le terminal de réception,
d) envoi d'un message de demande de sauvegarde (IR3) depuis le terminal de réception vers l'infrastructure tierce de confiance,
e) envoi d'un message de données de sauvegarde (IR4) comprenant des données à extraire depuis l'infrastructure tierce de confiance vers le terminal de réception,
f) stockage du message de données de sauvegarde dans le terminal de réception, et
g) envoi d'un message d'accusé de réception d'extraction (IR5) depuis le terminal de réception vers l'infrastructure tierce de confiance.

35. Procédé selon la revendication 34, comprenant en outre l'étape de génération du message de demande d'extraction (IR1) par le terminal de réception.

36. Procédé selon au moins l'une des revendications 34 à 35, comprenant en outre l'étape de contrôle du message de demande d'extraction (IR1) par l'infrastructure tierce de confiance.

37. Procédé selon au moins l'une des revendications 34 à 36, comprenant en outre l'étape de génération du message de demande d'authentification d'extraction (IR2) par l'infrastructure tierce de confiance.

38. Procédé selon au moins l'une des revendications 34 à 37, comprenant en outre l'étape de réponse au message de demande d'authentification (IR2) par le terminal de réception.

39. Procédé selon au moins l'une des revendications 34 à 38, comprenant en outre l'étape de génération du message de demande de sauvegarde (IR3) par le terminal de réception.

40. Procédé selon au moins l'une des revendications 34 à 39, comprenant en outre l'étape de vérification du messages d'authentification d'extraction (IR3) par l'infrastructure tierce de confiance.

41. Procédé selon au moins l'une des revendications 34 à 40, comprenant en outre l'étape de génération du message de données de sauvegarde (IR4) par l'infrastructure tierce de confiance.

42. Procédé selon au moins l'une des revendications 34 à 41, comprenant en outre l'étape de vérification du message de données d'extraction (IR4) par le terminal de réception.

43. Procédé selon au moins l'une des revendications 34 à 42, comprenant en outre l'étape de génération du message d'accusé de réception d'extraction (IR5) par le terminal de réception.

44. Procédé selon au moins l'une des revendications 34 à 43, comprenant en outre l'étape de contrôle de l'accusé de réception du message d'accusé de réception d'extraction (IR5) par l'infrastructure tierce de confiance.

45. Procédé selon au moins l'une des revendications précédentes, dans lequel au moins l'une des étapes est exécutée par un élément sécurisé comprenant un processeur cryptographique connecté au terminal respectif.

46. Procédé selon au moins l'une des revendications précédentes, incluant en outre une étape d'augmentation de la valeur de crédit du terminal de réception après avoir accepté un message de demande de sauvegarde (B1).

47. Procédé selon au moins l'une des revendications précédentes, incluant en outre une étape d'augmentation de la valeur de crédit du terminal de réception après avoir répondu à une demande d'extraction.

48. Procédé selon au moins l'une des revendications précédentes, incluant en outre une étape de diminution de la valeur de crédit du terminal d'envoi lors de la réception du résultat du message de contrôle (B5).

49. Procédé selon au moins l'une des revendications précédentes, incluant en outre une étape d'augmentation d'une valeur de crédit de l'ordre d'une valeur de dépôt après la réception d'un message d'accusé de réception d'extraction (DR5, IR5).

50. Système pour la sauvegarde et l'extraction de données entre plusieurs terminaux mobiles comprenant :
un terminal d'envoi avec des données à sauvegarder,
un moyen de génération de messages de demande de sauvegarde permettant de générer un message de demande de sauvegarde (B1), incluant la taille des données à sauvegarder,
un moyen de génération de messages de données de sauvegarde permettant de générer un message de données de sauvegarde (B3), comprenant les données à sauvegarder et un numéro d'identification de transaction,
un terminal de réception permettant de recevoir les données à sauvegarder,
un moyen de génération de messages d'accusé de réception de demande de sauvegarde permettant de générer un message d'accusé de réception de demande de sauvegarde (B2), comprenant le numéro d'identification de transaction,
un moyen de génération de messages d'accusé de réception de sauvegarde permettant de générer un message d'accusé de réception de sauvegarde (B4),
au moins un élément sécurisé comprenant un processeur cryptographique connecté au terminal respectif durant la génération de messages, et
une connexion de communication entre le terminal d'envoi et le terminal de réception permettant la transmission de messages et de données.

51. Système selon la revendication 50, dans lequel la connexion de communication entre le terminal d'envoi et le terminal de réception comprend une infrastructure tierce de confiance.

52. Système selon la revendication 51, dans lequel les données sauvegardées sont stockées dans l'infrastructure tierce de confiance.

53. Système selon la revendication 51 ou 52, dans lequel les données sauvegardées sont extraites de l'infrastructure tierce de confiance.

54. Système selon au moins l'une des revendications 50 à 53, dans lequel l'élément sécurisé est une carte à puce.
